# EUROPEAN PATENT APPLICATION

(11) **EP 4 703 682 A1**
(43) Date of publication of application: **04.03.2026**
(21) Application number: 25194178.7
(22) Date of filing: 05.08.2025
(51) Int. Cl.: G01C 21/08, G01C 21/16

(54) **TECHNIQUES FOR DETERMINING ESTIMATED SPATIAL POSITION USING A SEQUENCE OF CHARACTERISTICS OF THE EARTH**

(30) Priority: 30.08.2024 US 202418821574
(71) Applicant: Honeywell International Inc., Charlotte, NC 28202 (US)
(72) Inventor: ORHAN, Umut, Charlotte, 28202 (US); DINS, Carl Arthur, Charlotte, 28202 (US); STEWART, Andrew, Charlotte, 28202 (US); KEYES-EDWARDS, Sally Ann, Charlotte, 28202 (US); STEPHENS, Trevor Keith, Charlotte, 28202 (US)
(74) Representative: Haseltine Lake Kempner LLP

(57) **Abstract**

A sequence, of values of a characteristic of the Earth, is received. Each value is obtained from a measurement, that varies with spatial position with respect to a reference. Using the sequence of values, an estimated spatial position with respect to the reference, is determined, at a time, with an artificial intelligence (Al), *e.g.,* a generative AI (for example, an AI sequence model). The time may be a past or a current time.

## Description

### BACKGROUND

A global navigation satellite system (GNSS), for example Global Positioning System (GPS), emits signals which a GNSS receiver, of a vehicle, uses to ascertain a geographic position of the vehicle. GNSS signals are susceptible to jamming and/or spoofing. Therefore, a system is necessary to determine geographic position of the vehicle in the presence of jamming and/or spoofing.

In the absence of reliable GNSS signals, the geographic position of the vehicle may be determined alternatively. An inertial measurement unit may be used to determine geographic position of the vehicle, but this is susceptible to drift in the geographic position estimate over long periods of time. Alternatively, magnetic anomaly measurements and a magnetic anomaly map may be utilized by a navigation filter to mitigate this drift. The magnetic anomaly measurement at each time instance is used in conjunction with the inertial measurement unit to determine the geographic position of the vehicle.

The navigation filter compares a magnetic anomaly measurement at a time instance to a magnetic anomaly map, and determines a geographic location on the magnetic anomaly map corresponding to the magnetic anomaly measurement. Such geographic location is used to aid determination of the geographic position of the vehicle.

This technique, however, is susceptible to error because the navigation filter uses a single magnetic measurement to determine a single geographic location on the magnetic anomaly map. The single geographic location, generated in the foregoing way, may be erroneous because the magnetic anomaly field strength may be substantially the same for two or more adjacent geographic locations. As a result, the geographic position generated by the navigation filter may also be incorrect.

### SUMMARY OF THE INVENTION

In some aspects, the techniques described herein relate to a method of determining a location of a body, the method including: receiving a sequence of values of a characteristic of Earth obtained by measurement, wherein a value of the characteristic of the Earth varies with spatial position with respect to a reference; and using the sequence of values of the characteristic of the Earth, determining with an artificial intelligence (AI), at a time, an estimated spatial position of the body with respect to the reference.

**In** some aspects, the techniques described herein relate to a program product including a non-transitory processor readable medium on which program instructions are embodied, wherein the program instructions are configured, when executed by at least one programmable processor, to cause the at least one programmable processor to execute a process to determine a position of a body, the process including: receiving a sequence of values of a characteristic of Earth obtained by measurement, wherein a value of the characteristic of the Earth varies with spatial position of the body with respect to a reference; and using the sequence of values of the characteristic of the Earth, determining with an artificial intelligence (AI), at a time, an estimated spatial position of the body with respect to the reference.

**In** some aspects, the techniques described herein relate to an apparatus for determining a location on a surface of Earth on or over which a body is located, the apparatus including: first circuitry configured to obtain by measurement a characteristic of the Earth that varies with spatial position with respect to a reference; and a processing circuitry communicatively coupled the first circuitry; wherein the processing circuitry is configured to store a navigation filter and an artificial intelligence (AI); wherein the processing circuitry is configured to: receive a sequence of values of the characteristic of the Earth obtained by measurement, wherein a value of the characteristic of the Earth varies with the spatial position with respect to the reference; and using the sequence of values of the characteristic of the Earth, determine with an artificial intelligence (AI), at a time, an estimated spatial position of the body with respect to the reference.

### BRIEF DESCRIPTION OF THE DRAWINGS

Comprehension of embodiments of the invention is facilitated by reading the following detailed description in conjunction with the annexed drawings, in which:
FIG. 1 illustrates a block diagram of one embodiment of a position determining system for determining a location of a body according to embodiments of the invention;
FIG. 2 illustrates a block diagram of one embodiment of a processing system;
FIG. 3 illustrates a block diagram of one embodiment of the inertial navigation system;
FIG. 4 illustrates one embodiment of an artificial intelligence;
FIG. 5 illustrates a flow diagram of one embodiment of a method of training an artificial intelligence; and
FIG. 6 illustrates a flow diagram of one embodiment of a method of determining an estimated spatial position of a body with respect to a reference.

In accordance with common practice, the various described features are not drawn to scale but are drawn to emphasize specific features relevant to the exemplary embodiments. Reference characters denote like elements throughout figures and text.

### DETAILED DESCRIPTION

An alternative technique is comparing (a) a sequence of magnetic anomaly values obtained from measurements and made at different times, and thus two dimensional spatial locations on a surface of the Earth, along a path of travel of a body, *e.g.,* of a vehicle, with (b) different magnetic anomaly values of different paths on a magnetic anomaly map of the surface of the Earth.^{1 A magnetic anomaly map represents variations in magnetic field,over the Earth's surface, due to crustal variation with respect to position, *e.g.*, on a surface of, the Earth.} When a path is sufficiently long, each such path on the magnetic anomaly map has a unique, non-linear variation in magnetic anomaly values along the path. A trajectory database containing different paths on the magnetic anomaly map, which the sequence can be compared, is prohibitively expensive due to the number of paths which would have to be stored in the trajectory database.

In lieu of the trajectory database, an artificial intelligence is trained to perform the following function. A sequence, of values of a characteristic of the Earth, is received. Each value is obtained from a measurement that varies with spatial position with respect to a reference. Spatial position as used herein may be two or three dimensional spatial position. The reference may be a center of the Earth, a solid surface of the Earth, a mean sea level of the Earth, a reference ellipsoid representing the Earth such as the World Geodetic System 1984 model or a geoid model of global mean sea level, or any other reference.

The characteristic of the Earth is not limited to magnetic anomaly. Using the sequence of values, an estimated spatial position of the body with respect to the reference is determined, at a time, with an artificial intelligence (AI), *e.g.,* a generative AI (for example an AI sequence model). The time may be a past or a current time.

This technique is applicable to a sequence of values of any characteristic of the Earth that varies with and which is obtained by measurement. For example, without limitation, such a characteristic may be magnetic anomaly, gravity, gravity gradient, terrain height, or any other characteristic of the Earth that varies with spatial position with respect to a reference. Such sequence of the characteristic would be provided to the artificial intelligence. As long as the sequence is sufficiently long, the artificial intelligence can generate an estimated spatial position of the body, at a time, on a map of the characteristic with respect to the reference. The minimum length of the sequence required by the artificial intelligence is a function of the variability of the characteristic of the Earth with respect to the reference. The more the characteristic varies with distance, the shorter the sequence needs to be. Because different characteristics have different variability over distance, the minimum length may vary based on the characteristic of the Earth utilized.

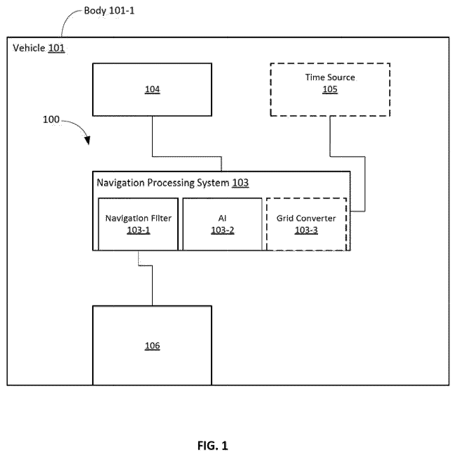

FIG. 1 illustrates a block diagram of one embodiment of a position determining system 100 for determining a location of a body according to embodiments of the invention. The body 101-1 may be a body of a vehicle, an animal, a human being, or anything else. For pedagogical purposes, the body 101-1 is illustrated as a body of a vehicle 101. The vehicle may be an airborne vehicle, a land borne vehicle, a seaborne vehicle, or any other type of vehicle. Optionally, the vehicle 101 may be an aircraft.

The position determining system 100 includes a navigation processing system (or processing circuitry) 103 communicatively coupled to each of a device (or circuitry) 104 configured to obtain by measurement a characteristic of the Earth that varies with spatial position on a surface of the Earth and a device (or circuitry) 106 configured to determine navigation states of the body, *e.g.* orientation, attitude, heading, position, and/or velocity. The device 104 configured to obtain by measurement a characteristic of the Earth that varies with respect to the reference may be a magnetometer, a gravimeter, a gravity gradiometer, an altimeter, or any other device which measures a characteristic of the Earth that varies with spatial position on a surface of the Earth. The device 106 configured to determine navigation states of the body may be a GNSS receiver, an inertial measurement system, or any other device which measures navigation states of the body. For purposes of clarity, embodiments of the invention may be used with a GNSS receiver which is not being jammed and not being spoofed.

Optionally, the position determining system 100 includes a time source (or time source circuitry) 105. Optionally, the time source 105 is configured to provide a time base from which time can be derived, *e.g.,* in the absence of reliable (*i.e.,* accurate) data from the GNSS receiver which would normally provide time. Optionally, the time source 105 is an atomic clock, crystal oscillator (*e.g.,* a temperature stabilized crystal oscillator), or any other time source other than a GNSS receiver. If the device 106 configured to determine navigation states of the body is a device other than a GNSS receiver, and the position determining system 100 optionally includes a GNSS receiver, then optionally the time source is configured to measure time starting from the last known good time received from the optional GNSS receiver. The GNSS receiver described herein may be a receiver for GPS, Global Navigation Satellite System (GLONASS), BeiDou navigation satellite system, Galileo satellite navigation system, Indian regional navigation satellite system, and/or any other navigation satellite system.

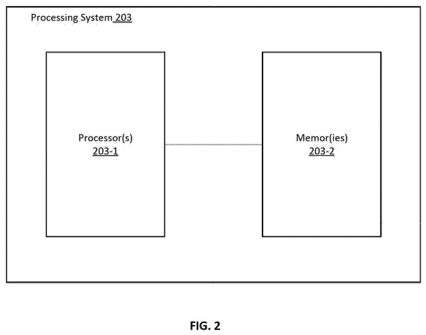

FIG. 2 illustrates a block diagram of one embodiment of a processing system 203. Such illustrated processing system 203 may be utilized by the navigation processing system 103 and/or an INS processing system. At least one processor (or at least one processor circuit) 203-1 is communicatively coupled to at least one memory (or at least one memory circuit) 203-2. The processing system 203, however, may be implemented in other ways.

Returning to FIG. 1, the navigation processing system 103 includes a navigation filter 103-1 and an artificial intelligence (AI) 103-2; optionally, the AI 103-2 is a generative AI. The navigation filter 103-1 may be a Kalman filter, a point mass filter, a particle filter, a filter using factor graph optimization, an unscented Kalman filter, and/or any other type of filter which can be utilized as a navigation filter. Optionally, the AI 103-2 is configured to receive a sequence of measured Earth characteristics operates as described elsewhere herein.

Optionally, the navigation processing system 103 includes a geospatial grid converter (or grid converter) 103-3 configured to convert (a) a spatial position represented by one or more non-integer numbers, *e.g.* two non-integer numbers (for example latitude and longitude), into a spatial position on a geospatial grid represented by one or more integers, and (b) a spatial position on a geospatial grid represented by one or more integers into a spatial position represented by one or more non-integer numbers, *e.g.* two non-integer numbers (for example latitude and longitude). Each of such spatial position is a location with respect to the reference. Optionally the geospatial grid is a hexagonal geospatial grid (for example an H3 geospatial grid system); however, other geospatial grid types may be used, including those formed with shape(s) other than a hexagon (for example a square or a space filing Hilbert curve). Optionally, the geospatial grid may be defined by what3words. The geographic location may be identified by an identifier corresponding to a specific shape in the geospatial grid system, or such identifier and an offset vector location within the specific shape. The offset vector location is a displacement in the specific shape from a point, *e.g.,* a center or other location, on the shape. Thus, one or more integers may be used to represent the specific shape in the geospatial grid system, and optionally one or more integers may be optionally used to represent the offset vector location within the specific shape. Although a grid converter 103-3 is illustrated for pedagogical purposes, the functionality of the grid converter 103-3 may be performed elsewhere in the navigation processing system 103 and is not needed to perform such functionality.

Optimally, when the device 106 configured to determine navigation states of the body is an inertial navigation system (INS), the INS includes at least one accelerometer and at least one gyroscope and is configured to determine a change in three dimensional position of the body 101-1, a change in vector velocity of the body 101-1, and/or a change in orientation of the body 101-1. Such data about such change(s) is configured to be transmitted from the INS to the navigation processing system 103, *e.g.,* the navigation filter 103-1.

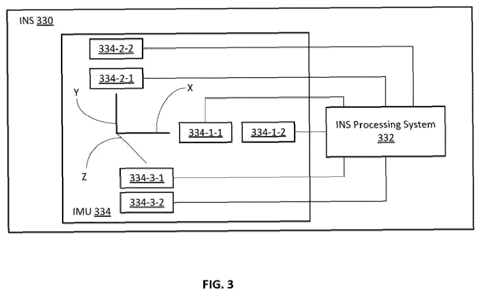

FIG. 3 illustrates a block diagram of one embodiment of the inertial navigation system (INS) 330. The INS 330 an inertial measurement unit (IMU) 334 communicatively coupled to an INS processing system (or INS processing circuitry) 332. Optionally, the IMU 334 includes an accelerometer 334-1-1, 334-2-1, 334-3-1 for measuring acceleration in each of three orthogonal axes X, Y, Z. The IMU 334 also optionally includes a gyroscope 334-1-2, 334-2-2, 334-3-2 for measuring acceleration in each of the three orthogonal axes X, Y, Z. Optionally, the INS processing system 332 may be implemented by the processing system illustrated in FIG. 2; however, the INS processing system 332 may be implemented in other ways. Although the INS processing system 332 and the navigation processing system 103 are illustrated herein as distinct elements for pedagogical purposes, the position determining system 100 may share a single processing system to perform functions of both of the INS processing system 332 and the navigation processing system 103.

The INS processing system 332 is communicatively coupled to each accelerometer 334-1-1, 334-2-1, 334-3-1 and to each gyroscope 334-1-2, 334-2-2, 334-3-2. Using acceleration data from each of such accelerometers 334-1-1, 334-2-1, 334-3-1 and rotation data from each of such gyroscopes 334-1-2, 334-2-2, 334-3-2, the INS processing system 332 is configured to determine the geographic position of the body 101-1, the velocity of the body 101-1, and/or the attitude of the body 101-1.

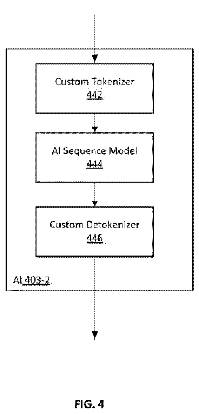

FIG. 4 illustrates one embodiment of the AI 403-2. The AI 403-2 includes a custom tokenizer 442, an AI sequence model 444, and a custom detokenizer 446. The AI 403-2, *e.g.,* the custom tokenizer 442, is configured to receive a sequence of values of a characteristic of the Earth, obtained from a measurement, that varies with geographic location on or about a surface of the Earth. Optionally, a geographic position with respect to the reference is also received, *e.g*., where a measurement was made from which a value of the characteristic (or characteristic value) was obtained; for example, the geographic position is where a measurement was made from which the first value of the characteristic in the sequence of values of the characteristic is obtained.

The AI 403-2, *e.g.,* the custom tokenizer 442, is configured to convert each received characteristic value to at least one integer which can be processed by the AI 403-2, *e.g.,* the AI sequence model 444.

The AI 403-2, *e.g.,* the AI sequence model 444, is configured to convert the sequence of characteristic values, *e.g*., received from the custom tokenizer 442, into another at least one integer representing an actual geographic location (*e.g.,* an estimated spatial position with respect to the reference) and optionally a time at which the body 101-1 is at, on, or over the estimated geographic position with respect to the reference. Such optional time may be the time increment at which a measurement was made for the last value of the characteristic of the Earth in the sequence, or another time (for example before or after such time increment). Optionally, the other at least one integer, representing each received pair, may comprise, *e.g*., two integers corresponding to the estimated spatial position with respect to the reference (for example, represented by a specific shape of a geospatial grid system) and the optional time at which the body 101-1 is at, on, or over the estimated spatial position with respect to the reference, or three integers corresponding to the specific shape of the geospatial grid system, the offset vector location within the specific shape, and the optional time at which the body 101-1 is at, on, or over the estimated spatial position with respect to the reference. Optionally, the AI sequence model 444 may be implemented by a neural network in the navigation processing system 103.

The AI 403-2, *e.g.,* the custom detokenizer 446 is configured to receive the other at least one integer from the output of the AI sequence model 444 and to convert the other at least one integer to an actual two dimensional spatial location on the surface of the Earth in a non-integer number format and to optionally convert the optional time, at which the body 101-1 is at, on, or over the actual geographic location, in a non-integer number format.

The actual two dimensional spatial location, and optionally the optional time, are provided from the AI 403-2, *e.g.,* the custom detokenizer 446, to a navigation filter which uses such information as aiding data with other data to ascertain a geographic position of the body 101-1.

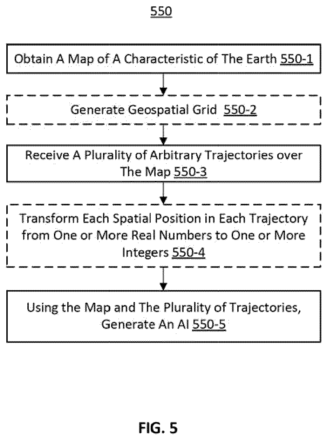

FIG. 5 illustrates a flow diagram of one embodiment of a method 550 of training an artificial intelligence, *e.g.,* a generative AI or a component thereof (for example an AI sequence model). To the extent that the methods shown in any of the Figures is described herein as being implemented in an apparatus shown in FIGS. 1, 2, 3, and/or 4, it is to be understood that other embodiments can be implemented in other ways. The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner). Optionally, the method 550 is performed by a processing system.

In block 550-1, a map, of a characteristic of the Earth versus a spatial position, *e.g.*, with respect to a reference, is obtained. Optionally, such map uses coordinates represented by one or more non-integer numbers, *e.g*., latitude and longitude. In optional block 550-2, a geospatial grid, of the at least part of the reference, is generated; the geospatial grid is described elsewhere herein. Location on the geospatial grid is identified by at least one integer value, *e.g.,* one integer value.

In block 550-3, a plurality of arbitrary trajectories, over the map, is received. Each trajectory includes a sequence of values of a characteristic of the Earth, derived from the map, that varies with spatial location, *e.g*., with respect to the reference. Optionally, a reference spatial position with respect to the reference is also received, *e.g.*, where a measurement was made from which a value of the characteristic was obtained; for example, the reference spatial position with respect to the reference is where a measurement was made from which the first value of the characteristic in the sequence of values of the characteristic

In optional block 550-4, each spatial position (with respect to the reference) in each received trajectory is transformed from one or more real numbers to one or more integers. Optionally, the reference spatial position (with respect to the reference) is transformed from a representation by one or more non-integer numbers to a representation by one or more integer numbers. Optionally, such transformation of optional block 550-4 is performed when the geospatial grid is generated in block 550-2. Optionally, each transformed spatial position may be identified by an identifier corresponding to a specific shape in the geospatial grid system, or such identifier and an identifier of an offset vector location within the specific shape.

In block 550-5, the AI, *e.g.,* the generative AI (for example, the AI sequence model), is generated using the map and the plurality of trajectories. If the AI, *e.g.,* the generative AI (for example, the AI sequence model), is trained with data using a specific class of numbers (*e.g.,* non-integer or integer), then the AI, *e.g.,* the generative AI (for example, the AI sequence model), is configured to receive and generate data with that specific class of number. Optionally, the AI, *e.g.,* the generative AI (for example, the AI sequence model), is stored in a neural network.

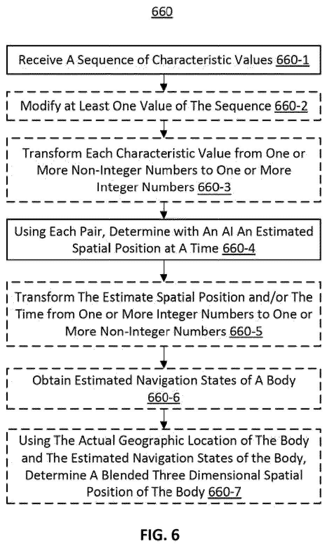

FIG. 6 illustrates a flow diagram of one embodiment of a method 660 of determining an estimated spatial position of a body with respect to a reference. Optionally, the method 660 uses the AI, *e.g.,* the generative AI (for example, the AI sequence model) trained according to method 550.

In block 660-1, a sequence, of values of a characteristic of the Earth, is received. Each characteristic value is obtained from a measurement that varies with spatial position with respect to a reference. Optionally, a reference spatial position with respect to the reference is provided, *e.g.*, where a measurement was made from which a value of the characteristic was obtained; for example, the reference spatial position is where a measurement was made from which the first value of the characteristic in the sequence of values of the characteristic.

In optional block 660-2, at least one value of the sequence is modified to remove at least one undesired factor, *e.g.,* effects of the body, the environment about or exterior to the body, and/or the Earth. For example, when measuring magnetic fields when the characteristic of the Earth is magnetic anomaly, one or more of the following values may be subtracted from the magnetic field measurements: magnetic interaction between the Earth's core field and the body, Earth's core field, and space weather effects (*e.g.,* due to solar flares). Optionally, in such case, the device configured to measure a characteristic of the Earth that varies with geographic location on or about a surface of the Earth may be a magnetometer.

In optional block 660-3, each characteristic value (or modified characteristic value if applicable) is transformed from a representation by one or more non-integer numbers to a representation by one or more integer numbers. Optionally, the optional reference spatial position is transformed from a representation by one or more non-integer numbers to a representation by one or more integer numbers. In block 660-4, using the sequence of characteristic values and optionally the optional, reference spatial position, an estimated spatial position with respect to the reference is determined, at a time, with an AI, *e.g.,* a generative AI (for example an AI sequence model). The time may be a past or a current time.

In optional block 660-5, the estimated spatial position of the body (with respect to the reference) and/or the time are each transformed from a representation by one or more integer numbers to representation by one or more non-integer numbers. In optional block 660-6, estimated navigation states of the body² are obtained, *e.g*., by the navigation processing system (for example, the navigation filter). Optionally, the estimated spatial position of the body (with respect to the reference) and/or the time determined in block 660-4 are also received, *e.g.,* by the same device.

In optional block 660-7, using the estimated spatial position (with respect to the reference) and the estimated navigation states of the body, a blended three dimensional spatial position of the body, *e.g.*, relative to the surface of the Earth, is determined. Optionally, block 660-7 is performed using the navigation processing system (for example, the navigation filter).

The processor circuitry described herein may include one or more microprocessors, microcontrollers, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), and/or flash memory. Combinations of the above are also included within the scope of computer readable media.

Methods of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

The maps described herein may optionally be in a form of a database. Databases as used herein may be either conventional databases or data storage formats of any type, *e.g.,* data files. Although separate databases are recited herein, one or more of such databases may be combined.

### Exemplary Embodiments

Example 1 includes a method of determining a location of a body, the method comprising: receiving a sequence of values of a characteristic of Earth obtained by measurement, wherein a value of the characteristic of the Earth varies with spatial position with respect to a reference; and using the sequence of values of the characteristic of the Earth, determining with an artificial intelligence (AI), at a time, an estimated spatial position of the body with respect to the reference.

Example 2 includes the method of Example 1, wherein the reference is one of: a center of the Earth, a solid surface of the Earth, a mean sea level of the Earth, and a reference ellipsoid representing the Earth.

Example 3 includes the method of any of Examples 1-2, wherein the characteristic of the Earth is one of magnetic anomaly, gravity, gravity gradient, and terrain height.

Example 4 includes the method of any of Examples 1-3, further comprising: transforming each value of a characteristic of the sequence from one or more non-integer numbers to one or more integer numbers; and transforming each spatial position and/or the time from a representation by one or more integer numbers to another representation by one or more non-integer numbers.

Example 5 includes the method of any of Examples 1-4, further comprising modifying at least one value of the sequence of values of the characteristic of the Earth by removing at least one undesired effect.

Example 6 includes the method of any of Examples 1-5, further comprising: obtaining navigation states of the body; and using the estimated spatial position of the body and the navigation states of the body, determining a blended three dimensional spatial position of the body relative to the reference.

Example 7 includes a program product comprising a non-transitory processor readable medium on which program instructions are embodied, wherein the program instructions are configured, when executed by at least one programmable processor, to cause the at least one programmable processor to execute a process to determine a position of a body, the process comprising: receiving a sequence of values of a characteristic of Earth obtained by measurement, wherein a value of the characteristic of the Earth varies with spatial position of the body with respect to a reference; and using the sequence of values of the characteristic of the Earth, determining with an artificial intelligence (AI), at a time, an estimated spatial position of the body with respect to the reference.

Example 8 includes the program product of Example 7, wherein the reference is one of: a center of the Earth, a solid surface of the Earth, a mean sea level of the Earth, and a reference ellipsoid representing the Earth.

Example 9 includes the program product of any of Examples 7-8, wherein the characteristic of the Earth is one of magnetic anomaly, gravity, gravity gradient, and terrain height.

Example 10 includes the program product of any of Examples 7-9, wherein the process further comprises: transforming each value of a characteristic of the sequence from one or more non-integer numbers to one or more integer numbers; and transforming each spatial position and/or the time from a representation by one or more integer numbers to another representation by one or more non-integer numbers.

Example 11 includes the program product of any of Examples 7-10, wherein the process further comprises modifying at least one value of the sequence of values of the characteristic of the Earth by removing at least one undesired effect.

Example 12 includes the program product of any of Examples 7-11, wherein the process further comprises: obtaining navigation states of the body; and using the estimated spatial position of the body and the navigation states of the body, determining a blended three dimensional spatial position of the body relative to the reference.

Example 13 includes an apparatus for determining a location on a surface of Earth on or over which a body is located, the apparatus comprising: first circuitry configured to obtain by measurement a characteristic of the Earth that varies with spatial position with respect to a reference; and a processing circuitry communicatively coupled the first circuitry; wherein the processing circuitry is configured to store a navigation filter and an artificial intelligence (AI); wherein the processing circuitry is configured to: receive a sequence of values of the characteristic of the Earth obtained by measurement, wherein a value of the characteristic of the Earth varies with the spatial position with respect to the reference; and using the sequence of values of the characteristic of the Earth, determine with an artificial intelligence (AI), at a time, an estimated spatial position of the body with respect to the reference.

Example 14 includes the apparatus of Example 13, wherein the reference is one of: a center of the Earth, a solid surface of the Earth, a mean sea level of the Earth, and a reference ellipsoid representing the Earth.

Example 15 includes the apparatus of any of Examples 13-14, wherein the characteristic of the Earth and the first circuitry are magnetic anomaly and a magnetometer, gravity and a gravimeter, gravity gradient and gravity gradiometer, or terrain height and an altimeter.

Example 16 includes he apparatus of any of Examples 13-15, wherein the processing circuitry is further configured to: transform each value of a characteristic of the sequence from one or more non-integer numbers to one or more integer numbers; and transform each estimated spatial location and/or the time from a representation by one or more integer numbers to another representation by one or more non-integer numbers.

Example 17 includes the apparatus of any of Examples 13-16, wherein the processing circuitry is further configured to modify at least one value of the sequence of values of the characteristic of the Earth by removing at least one undesired effect.

Example 18 includes the apparatus of any of Examples 13-17, further comprising second circuitry configured to generate data from which navigation states of the body are obtained; wherein the processing circuitry is communicatively coupled to the second circuitry; wherein the processing circuitry is further configured to: obtain the navigation states of the body; and using the estimated spatial position of the body and the navigation states of the body, determine a blended three dimensional spatial position of the body relative the reference.

Example 19 includes the apparatus of Example 13-18, wherein the second circuitry is a global navigation satellite system receiver, an inertial navigation system, or an inertial measurement unit.

Example 20 includes the apparatus of any of Examples 13-19, further comprising a time source circuitry communicatively coupled to the processing circuitry and configured to provide a time base.

A number of embodiments of the invention defined by the following claims have been described. Nevertheless, it will be understood that various modifications to the described embodiments may be made without departing from the spirit and scope of the claimed invention. Accordingly, other embodiments are within the scope of the following claims.

## Claims

1. A method of determining a location of a body, the method comprising:
receiving a sequence of values of a characteristic of Earth obtained by measurement, wherein a value of the characteristic of the Earth varies with spatial position with respect to a reference; and
using the sequence of values of the characteristic of the Earth, determining with an artificial intelligence (AI), at a time, an estimated spatial position of the body with respect to the reference;
optionally, wherein the characteristic of the Earth is one of magnetic anomaly, gravity, gravity gradient, and terrain height.

2. The method of claim 1, further comprising:
transforming each value of a characteristic of the sequence from one or more non-integer numbers to one or more integer numbers; and
transforming each spatial position and/or the time from a representation by one or more integer numbers to another representation by one or more non-integer numbers.

3. The method of claims 1-2, further comprising modifying at least one value of the sequence of values of the characteristic of the Earth by removing at least one undesired effect.

4. The method of claims 1-3, further comprising:
obtaining navigation states of the body; and
using the estimated spatial position of the body and the navigation states of the body, determining a blended three dimensional spatial position of the body relative to the reference.

5. A program product comprising a non-transitory processor readable medium on which program instructions are embodied, wherein the program instructions are configured, when executed by at least one programmable processor, to cause the at least one programmable processor to execute a process to determine a position of a body, the process comprising on of methods 1-4.

6. An apparatus for determining a location on a surface of Earth on or over which a body is located, the apparatus comprising:
first circuitry configured to obtain by measurement a characteristic of the Earth that varies with spatial position with respect to a reference; and
a processing circuitry communicatively coupled the first circuitry;
wherein the processing circuitry is configured to store a navigation filter and an artificial intelligence (AI);
wherein the processing circuitry is configured to:
receive a sequence of values of the characteristic of the Earth obtained by measurement, wherein a value of the characteristic of the Earth varies with the spatial position with respect to the reference; and
using the sequence of values of the characteristic of the Earth, determine with an artificial intelligence (AI), at a time, an estimated spatial position of the body with respect to the reference;
optionally, wherein the characteristic of the Earth and the first circuitry are magnetic anomaly and a magnetometer, gravity and a gravimeter, gravity gradient and gravity gradiometer, or terrain height and an altimeter.

7. The apparatus of claim 6, wherein the processing circuitry is further configured to:
transform each value of a characteristic of the sequence from one or more non-integer numbers to one or more integer numbers; and
transform each estimated spatial location and/or the time from a representation by one or more integer numbers to another representation by one or more non-integer numbers.

8. The apparatus of claim 6-7, wherein the processing circuitry is further configured to modify at least one value of the sequence of values of the characteristic of the Earth by removing at least one undesired effect.

9. The apparatus of claim 6-8, further comprising second circuitry configured to generate data from which navigation states of the body are obtained;
wherein the processing circuitry is communicatively coupled to the second circuitry;
wherein the processing circuitry is further configured to:
obtain the navigation states of the body; and
using the estimated spatial position of the body and the navigation states of the body, determine a blended three dimensional spatial position of the body relative the reference;
optionally, wherein the second circuitry is a global navigation satellite system receiver, an inertial navigation system, or an inertial measurement unit.

10. The apparatus of claim 6-9, further comprising a time source circuitry communicatively coupled to the processing circuitry and configured to provide a time base.
